Europäisches Patentamt

European Patent Office

Office européen des brevets

(11) Veröffentlichungsnummer: **0 266 534**
**A2**

(12) **EUROPÄISCHE PATENTANMELDUNG**

(21) Anmeldenummer: **87113816.0**

(22) Anmeldetag: **22.09.87**

(51) Int. Cl.⁴: **G01N 1/20**

(30) Priorität: **05.11.86 DE 3637757**

(43) Veröffentlichungstag der Anmeldung:
**11.05.88 Patentblatt 88/19**

(84) Benannte Vertragsstaaten:
**DE ES FR GB IT**

(71) Anmelder: **Krupp Polysius AG**
**Graf-Galen-Strasse 17**
**D-4720 Beckum(DE)**

(72) Erfinder: **Beltrop, Herbert, Dipl.-Ing.**
**Spichernstrasse 48**
**D-4700 Hamm(DE)**
Erfinder: **Kronemeyer, Helmut, Dipl.-Ing.**
**Mierendorffstrasse 5**
**D-4740 Oelde(DE)**

(74) Vertreter: **Tetzner, Volkmar, Dr.-Ing. Dr. jur.**
**Van-Gogh-Strasse 3**
**D-8000 München 71(DE)**

(54) **Probenteiler.**

(57) Ein Probenteiler für feinkörnige Schüttgutproben enthält - symmetrisch untereinander angeordnet -ein Probenaufgaberohr, ein Teilerorgan sowie unterhalb des Teilerorgans vorgesehene Auffanggefäße für Teilprobenmengen. Das Teilerorgan ist als Teilerkegel mit an seiner Basisfläche verteilt angeordneten Probenverteilöffnungen ausgebildet, an die eine Anzahl erster Teilprobenrohre angeschlossen ist, unter denen ein Sammeltrichter, ein zweiter Teilerkegel und darunter eine Anzahl zweiter Teilprobenrohre angeordnet ist, die mit den Auffanggefäßen verbunden sind. Auf diese Weise läßt sich bei äußerst guter und zuverlässiger Aufteilung bei einem Probendurchgang durch den Probenteiler eine Ausgangsprobenmenge in eine verhältnismäßig große Anzahl von Teilprobenmengen aufteilen.

EP 0 266 534 A2

## Probenteiler

Die Erfindung betrifft einen Probenteiler für feinkörnige Schüttgutproben, gemäß dem Oberbegriff des Patentanspruches 1.

In schüttgutverarbeitenden Betrieben ist es immer wieder erforderlich, Proben des Schüttgutes zu ziehen und sie insbesondere aus ihre stofflichen Zusammensetzungen zu untersuchen. Bei diesen Schüttgütern kann es sich insbesondere um mineralische und chemische Schüttgüter sowie auch um Nahrungsmittel handeln. Um für die jeweiligen Untersuchungen in einem Laboratorium repräsentative Schüttgutproben zu erhalten, werden diese aus einer ruhenden Schüttgutmenge oder auch aus einem fließenden Schüttgutstrom abgenommen, wobei die im allgemeinen zu große Probenmenge dann in verarbeitbare, repräsentative Teilproben aufgeteilt werden muß. Hierzubedient man sich in der Praxis der Probenteiler.

Eine in der Praxis sehr häufig verwendete Ausführungsart eines Probenteilers ist der sogenannte Riffelprobenteiler, bei dem eine aufzuteilende Schüttgutprobe einem Aufgabetrichter mit darunter angeordnetem Verbindungsrohr oder Verbindungsschacht aufgegeben wird, aus dem die Ausgangsprobe auf ein Teilerorgan geleitet wird, das im wesentlichen aus einer Reihe von mit Abstand voneinander angeordneten, parallele Schlitze bildenden Stäben besteht, die abwechselnd nach zwei verschiedenen Seiten geneigt sind, wodurch eine Ausgangsprobe gleichmäßig auf zwei Probenauffanggefäße verteilt werden soll. Falls eine Ausgangsprobe in eine größere Anzahl von Teilprobenmengen aufgeteilt werden soll, dann müssen die jeweils erhaltenen Teilproben in gleicher Weise nochmals bzw. mehrmals aufgeteilt, werden, was vor allem für größere Probenaufbereitungsanlagen in größeren Laboratorien äußerst umständlich ist.

Weiterhin ist aus der Praxis eine Ausführungsform bekannt, bei der innerhalb eines symmetrischen, konischen oder doppeltkonischen Behälters ein Drehrohr angeordnet ist, das durch einen entsprechenden Antrieb gleichförmig umlaufend angetrieben wird und dabei ein oberes zentrales Probenaufgaberohr nacheinander mit einer Vielzahl von am unteren Ende des Behälters vorgesehenen Teilproben-Auffanggefäßen verbindet. Bei diesem bekannten Probenteiler sind eine zuverlässige Halterung und Lagerung des Drehrohres sowie eine entsprechend zugeordnete und ständig laufende Drehantriebseinrichtung erforderlich.

Der Erfindung liegt die Aufgabe zugrunde, einen Probenteiler der im Oberbegriff des Anspruches 1 vorausgesetzten Art zu schaffen, bei dem unter Vermeidung umlaufender Bauteile und bei relativ enfachem Aufbau ein zuverlässiges Aufteilen einer Schüttgutprobe in eine beliebige Anzahl und in beliebig große Teilmengen ermöglicht ist.

Diese Aufgabe wird erfindungsgemäß durch die im Kenn zeichen des Anspruches 1 angegebenen Merkmale gelöst.

Durch diese Ausbildung und sinnvolle Zusammenordnung der wesentlichen Bauteile wird in dem erfindungsgemäßen Probenteiler eine über das Probeaufgaberohr zugeführte Ausgangsprobe zunächst von dem obersten, ersten Teilerkegel ein erstes Mal gleichmäßig aufgeteilt und den über dem Umfang seiner Basisfläche verteilt angeordneten Probenverteilöffnungen und von dort den darunter befindlichen ersten Teilprobenrohren zugeleitet, die an ihren unteren Enden zunächst durch ihre Ventile verschlossen sind und somit je eine Teilprobenmenge aufnehmen. Es versteht sich von selbst, daß die Anzahl und Größe dieser ersten Teilprobenrohre ausreicht, um insgesamt eine ganze Ausgangsprobenmenge aufnehmen zu können. Nachdem die Ausgangsprobenmenge auf die ersten Teilprobenrohre gleichmäßig verteilt ist,können alle oder nur eine Anzahl ausgewählter erster Teilprobenrohre über ihre Ventile geöffnet werden, so daß diese Teilprobenmengen, die insgesamt einer gewünschen und zusammenstellbaren Probenmenge entsprechen können, in einem Sammeltrichter zusammengeführt und von dort erneut über einen Auslaufrohrstutzen, einen zentral darunter angeordneten zweiten Teilerkegel und zweite Teilprobenrohre in Teilprobenmengen aufgeteilt werden, die direkt in die zugehörigen Auffanggefäße geleitet werden.

Bei den der Erfindung zugrundeliegenden Versuchen hat sich gezeigt, daß durch den erfindungsgemäßen Probenteiler eine Ausgangsschüttgutprobe äußerst gleichmäßig in die gewünschten Teilprobenmengen aufgeteilt werden kann. Hierzu trägt vor allem auch das Zusammenwirken eines Teilerkegels mit dem Schieberrohrstück bei, dessen unteres Mündungsende pulsierend und abdichtend gegen die Mantelfläche des zugehörigen Teilerkegels verfahrbar ist. Dieses fortwährende Unterbrechen des Schüttgutstromes einer zuzuführenden und aufzuteilenden Ausgangsprobe bewirkt eine deutlich bessere Vergleichmäßigung am Umfang des Teilerkegels,als es bei einem einmaligen und gleichbleibenden Öffnen eines Rohrschiebers möglich ist.

Weitere vorteilhafte Ausgestaltungen und Weiterbildungen der Erfindung sind Gegenstand der Unteransprüche.

Die Erfindung sei im folgenden anhand eines in der Zeichnung veranschaulichten Ausführungsbeispieles näher erläutert. In dieser Zeichnung zeigen

Fig. 1 eine weitgehend schematisch gehaltene Gesamtansicht des Probenteilers;

Fig. 2 eine Vertikalschnittansicht im Bereich eines Teilerkegels mit darüber angeordnetem Schieberrohrstück;

Fig. 3 eine Schnittansicht etwa entlang der Linie III-III in Fig. 2.

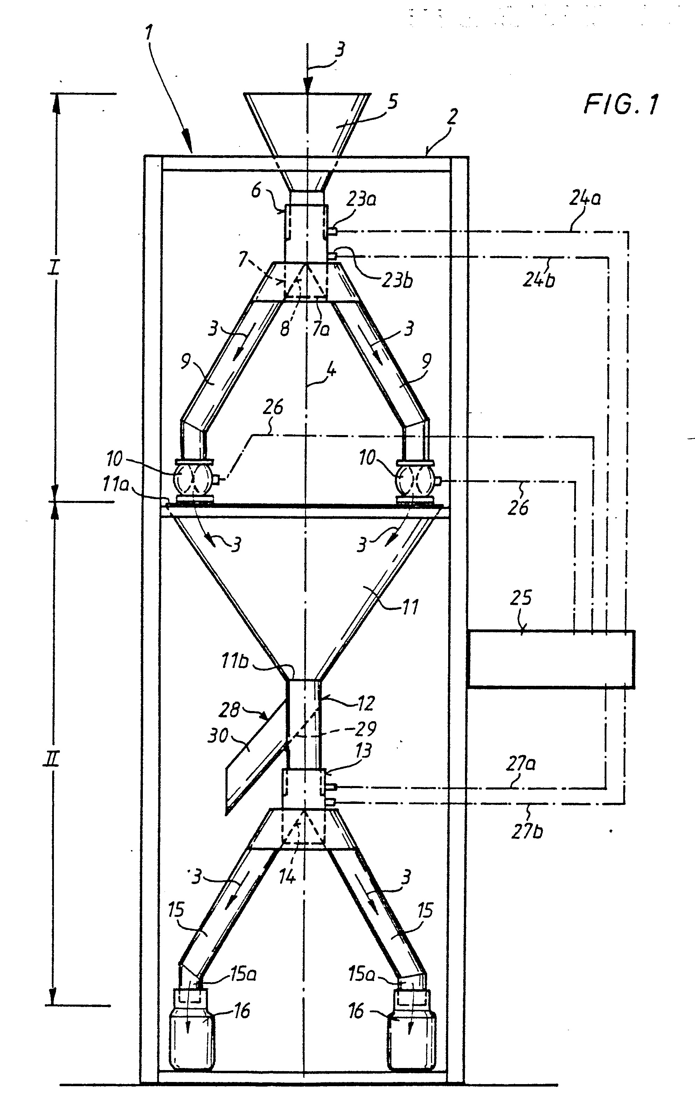

Anhand der weitgehend schematisch gehaltenen Fig. 1 sei zunächst der allgemeine Gesamtaufbau einer bevorzugten Ausführungsform des Probenteilers 1 erläutert. Dieser Probenteiler 1 kann in einem geeigneten Rahmengestell 2 angeordnet und gehaltert sein. Die Fließrichtung einer aufzuteilenden Ausgangsprobe eines feinkörnigen Schüttgutes ist in Fig. 1 durch Pfeile 3 angezeigt. Betrachtet man den in Fig. 1 veranschaulichten Gesamtaufbau des Probenteilers 1, dann sind in dieser Fließrichtung (Pfeil 3) folgende Teile untereinander sowie symmetrisch zu einer gemeinsamen vertikalen Achse 4 angeordnet: Ein die Ausgangsprobe aufnehmender, symmetrisch ausgebildeter Probenaufgabetrichter 5, ein an dessen unteres Ende unmittelbar angeschlossenes Probenaufgaberohr 6 mit einem an seinem unteren Ende ausgebildeten ersten Schieberrohrstück 7, ein unter dem Mündungsende 7a des ersten Schieberrohrstückes 7 vorgesehener erster Teilerkegel 8, eine Anzahl davon ausgehender, schräg nach unten, außen gerichteter erster Teilprobenrohre 9 mit verschließbaren Ventilen 10 an ihren unteren Enden, ein symmetrischer, gerader und nach unten zusammenlaufender Sammeltrichter 11 mit einem Auslaufrohrstutzen 12 und einem an dessen unteren Ende angeordneten zweiten Schieberrohrstück 13, ferner ein zweiter Teilerkegel 14, eine Anzahl davon ausgehender und schräg nach unten-außen verlaufender zweiter Teilprobenrohre 15 sowie eine Anzahl von Auffanggefäßen 16, die jeweils an den unteren Enden 15a der zweiten Teilprobenrohre 15 lösbar befestigt sind und durch Gläser, Metallbüchsen, Beutel oder dergleichen gebildet sein können.

Bei dieser Ausbildung und Zusammenordnung des Probenteilers 1 bilden die Teile vom Probenaufgabetrichter 5 bis zu den Ventilen 10 an den unteren Enden der ersten Teilprobenrohre eine erste Teilungsstufe I und die Teile vom Sammeltrichter 11 bis zu den zweiten Teilprobenrohren 15 bzw. den Auffanggefäßen 16 eine zweite Teilungsstufe II.

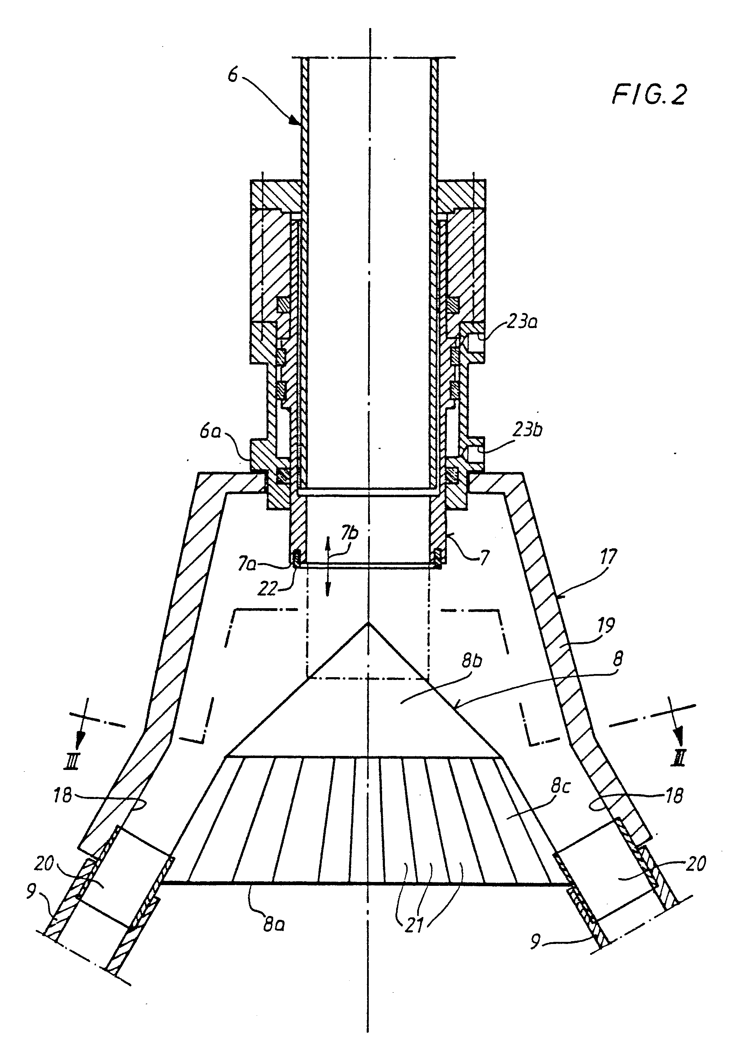

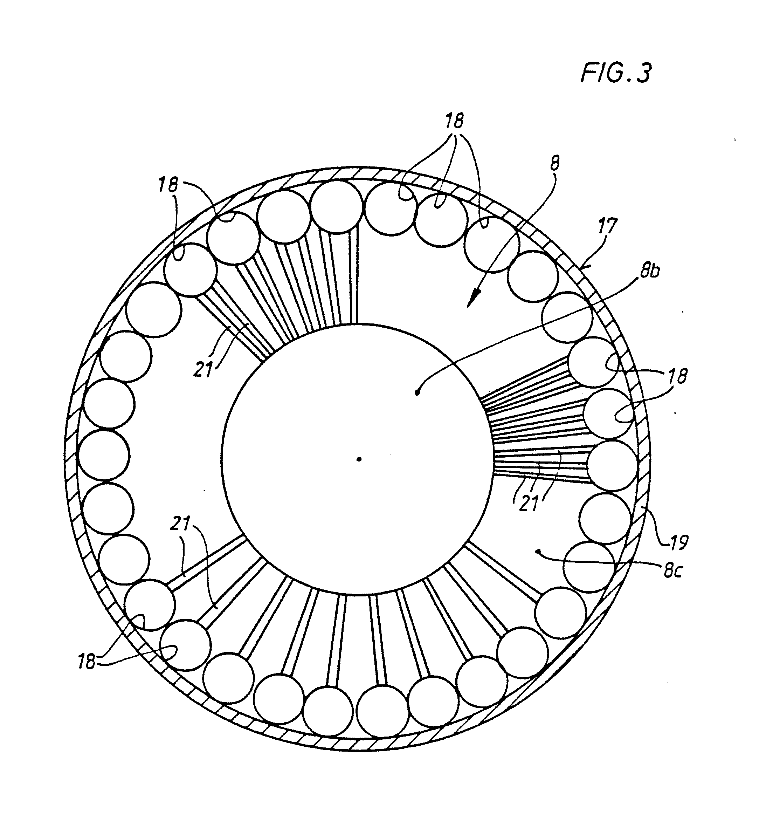

Wesentliche Bauteile dieses Probenteilers 1 stellen die beiden Teilerkegel 8 und 14 mit den darüber angeordneten Rohren bzw. Rohrstutzen 6 bzw. 12 sowie insbesondere mit den zugehörigen Schieberrohrstücken 7 bzw. 13 dar. Da diese Zusammenordnungen im Bereich jedes Teilerkegels konstruktiv im wesentlichen gleichartig ausgebildet sind, sei anhand der Fig. 2 und 3 lediglich der obere, erste Teilerkegel 8 mit den vor-und nachgeordneten Bauteilen des Probenteilers erläutert.

Der Teilerkegel 8 ist zentral in einem ihn mit radialem Abstand umgebenden Gehäuse 17 angeordnet, in das zentral von oben her das Schieberrohrstück 7 hineinragt, das in Richtung des Doppelpfeiles 7b, also in vertikaler Richtung bewegbar am unteren Ende 6a des Probenaufgaberohres 6 ausgebildet und gehaltert ist (was im einzelnen noch näher erläutert wird).

Der Teilerkegel 8 ist in geometrisch gerader Form mit nach oben weisender Spitze ausgebildet, wobei über den Umfang seiner (unteren) Basisfläche 8a gleichmäßig verteilt eine Vielzahl von Probenverteilöffnungen 18 vorgesehen ist; diese Probenverteilöffnungen 18 sind in dem zwischen dem Mantel 19 des Gehäuses 17 und der Kegelbasisfläche 8a vorhandenen ringraum eng aufeinanderfolgend (vgl. Fig. 3) ausgebildet.

In einer bevorzugten Ausführungsform ist jeder Teilerkegel 8 bzw. 14 und sein Gehäuse 17 einstückig hergestellt, wobei die Probenverteilöffnungen 18 als Bohrungen ausgeführt sind.

In Fig. 2 ist auch zu erkennen, daß sich an die Probenverteilöffnungen 18 nach unten unmittelbar die oberen Enden der ersten Teilprobenrohre 9 anschließen, beispielsweise unter Zwischenschaltung eingepaßter Rohrstutzen 20.

Jeder Teilerkegel 8 (bzw. 14) weist im veranschaulichten Ausführungsbeispiel an seinem mit dem unteren Mündungsende 7a des Schieberrohrstückes 7 zusammenwirkenden oberen Ende 8b eine glatte Mantelfläche auf. Dagegen ist die Mantelfläche etwa im Bereich der unteren Kegelhälfte 8c mit gleichmäßig über den Umfang verteilten, im Grundriß (Fig. 3) im wesentlichen radial verlaufenden, durchgehenden Leitrillen 21 versehen. Diese Leitrillen 21 können in ihrer Anzahl und Zuordnung zu den einzelnen Probenverteilöffnungen 18 sowie in ihrer Querschnittsform und Größe den Korngrößen bzw. den überwiegend anfallenden Korngrößen der aufzuteilenden Schüttgüter angepaßt sein. Dabei ist bis an jede Probenverteilöffnung 18 wenigstens eine Leitrille 21 herangeführt. Einige Ausführungsmöglichkeiten hierfür sind in Fig. 3 angedeutet. In der zeichnerischen Darstellung dieser Fig. 3 ist in der unteren Hälfte an jede Probenverteilöffnung 18 eine einzige Leitrille 21 symmetrisch (mittig) herangeführt; in dem linken oberen Viertel der zeichnerischen Darstellung in Fig. 3 ist eine Möglichkeit veranschaulicht, wie an jede Probenverteilöffnung 18 zwei Leitrillen 21 herangeführt sein können; und in der rechten oberen Hälfte in Fig. 3 sind an jede Probenverteilöffnung 18 drei solcher Leitrillen 21 symmetrisch herangeführt.

Gemäß Darstellung in Fig. 2 ist das untere Ende 6a des Probenaufgaberohres 6 flanschartig an das obere Ende des Gehäuses 17 angeschlossen, so daß dieses Probenaufgaberohr 6 ortsfest angeordnet ist. Innerhalb dieses unteren Endes 6a des Probenaufgaberohres 6 ist das erste Schieberrohrstück 7 in vertikaler Richtung (Doppelpfeil 7b) beweglich aufgenommen, und zwar derart, daß sein unteres Mündungsende 7a pulsierend und abdichtend gegen die glatte Mantelfläche des oberen Teilerkegelendes 8b verfahrbar ist. Dieses untere Mündungsende 7a weist daher einen nach unten vorstehenden Dichtungsring 22 auf. Um das Schieberrohrstück 7 mit seinem unteren Mündungsende 7a in einem wählbaren Rhythmus pulsierend auf-und abbewegen zu können, ist es pneumatisch antreibbar, wozu es mit dem zugehörigen, darüber befindlichen festen Rohrabschnitt, in diesem Falle also mit dem unteren Ende 6a des Aufgaberohres 6, nach Art einer Zylinder-Kolben-Anordnung zusammenwirkt. Zu diesem Zweck sind an dem unteren Probenaufgaberohrende 7a, das das Schieberrohrstück7 gleitbeweglich aufnimmt, Druckluftanschlüsse 23a, 23b vorgesehen, die über Druckluftsteuerleitungen 24a bzw. 24b mit einer geeigneten Druckluftquelle 25 in Verbindung stehen. Jeder Druckluftanschluß 23a bzw. 23b ist mit einer zwischen dem Rohrende 6a und dem Schieberrohrstück 7 ausgebildeten, zugehörigen und abgedichteten Kammer derart verbunden, daß bei wechselnder Druckluftbeaufschlagung das Schieberrohrstück 7 abwechselnd aufwärts und abwärts (bis an die Mantelfläche des Teilerkegels 8) verfahren werden kann. Hierzu geeignete, einstellbare Steuereinrichtungen sind allgemein bekannt und brauchen daher nicht im einzelnen erläutert zu werden.

Wie bereits weiter oben erwähnt worden ist, ist der untere, zweite Teilerkegel 14 sowie das zugehörige zweite Schieberrohrstück 13 in konstruktiver Hinsicht gleichartig wie der obere, erste Teilerkegel 8 mit seinen zugehörigen Bauteilen ausgebildet. Hierbei kann um die Basisfläche des unteren, zweiten Teilerkegels 14 eine gleichgroße Anzahl von Probenverteilungsöffnungen 18 oder eine andere Anzahl, beispielsweise eine kleinere Anzahl, von Probenverteil öffnungen vorgesehen sein; dies kann den jeweiligen Einsatzfällen des Probenteilers angepaßt sein. Nach der Darstellung in Fig. 3 sei angenommen, daß zumindest am oberen, ersten Teilerkegel 8 dreißig Probenverteilöffnungen in Umfangsrichtung eng aufeinanderfolgend vorgesehen sind.

Bei den an den unteren Enden der oberen, ersten Teilprobenrohre 9 angeordneten Ventilen 10 kann generell jede geeignete Ventilart Verwendung finden. Als besonders vorteilhaft werden pneumatisch und wahlweise betätigbare Quetschventile 10 angesehen. Diese pneumatischen Quetschventile 10 können handelsübliche Quetschventile 10 sein, so daß sie im einzelnen nicht näher erläutert werden müssen. Diese Quetschventile 10 sind über Druckluftsteuerleitungen 26 vorzugsweise ebenfalls an die Druckluftsteuerquelle 25 angeschlossen, mit der auch das untere, zweite Schieberrohrstück 13 über gesonderte Druckluftsteuerleitungen 27a und 27b in Verbindung steht.

Die pneumatischen Quetschventile 10 sind in gleichmäßiger Verteilung auf dem oberen Umfangsrand 11a des nach unten konisch zulaufenden Sammeltrichters 11 angeordnet. Bei diesem Sammeltrichter 11 kann es sich um einen ganz einfach ausgebildeten Trichter ohne irgendwelche inneren Einbauten handeln. An das untere Auslaufende 11b dieses Sammeltrichters 11 ist der Auslaufrohrstutzen 12 direkt angeschlossen, dessen unteres Ende - wie erläutert - mit dem zweiten Schieberrohrstück 13 ausgebildet ist.

Vorzugsweise ist in diesem Auslaufrohrstutzen 12 oberhalb des zweiten Schieberrohrstückes 13 noch eine Rohrweiche 28 eingebaut, die als wesentliche Teile eine in den Rohrquerschnitt des Auslaufrohrstutzens 12 hineinschwenkbare Ablenkklappe 29 sowie einen äußeren Ableitstutzen 30 zum Ableiten (Verwerfen) nicht benötigter Probenanteile enthält.

Dieser Probenteiler ist besonders gut geeignet für feinkörnige Schüttgüter mit einer Körnungsgröße von gleich oder kleiner als etwa 5mm. Er kann sowohl in Untersuchungs-Laboratorien von schüttgutverarbeitenden Betrieben als auch in den entsprechenden Betriebsbereichen selbst eingesetzt werden, in denen die zu untersuchenden Proben gezogen werden.

Nachfolgend sei ein Anwendungsbeispiel dieses Probenteilers beschrieben, wobei angenommen wird, daß in der ersten Teilungsstufe I der erste Teilerkegel 8 mit dreißig Probenverteilöffnungen 18 und dreißig daran angeschlossenen ersten Teilprobenrohren 9 und in der zweiten Teilungsstufe II der zweite Teilerkegel 14 mit vierundzwanzig Probenverteilöffnungen und vierundzwanzig daran anschließenden zweiten Teilprobenröhren 15 ausgebildet ist. Ferner sei angenommen, daß Feinkohle mit einer Körnungsgröße von maximal 3 mm untersucht werden soll und die Ausgangsprobe etwa 3000 g beträgt, aus der zwei Proben mit je 100 g und zwei Proben mit je 500 g abgeteilt werden sollen, während die Restmenge, also der über 1200 g betragende Probenanteil verworfen wird.

Die Ausgangsprobe (3000 g) wird in den Probenaufgabetrichter 5 eingefüllt. Bei der nun stattfindenden statischen Probenteilung (Aufteilung nur mit freifließendem Schüttgut) gelangt die Probenmenge in der ersten Teilungsstufe über das Probenaufgaberohr 6 und das pulsierend auf-und abverfahrbare erste Schieberrohrstück 7 auf den ersten Teilerkegel 8, wo eine erste gleichmäßige Aufteilung der Ausgangsprobenmenge auf die dreißig Probenverteilöffnungen und die daran angeschlossenen dreißig ersten Teilprobenrohre 9 erfolgt, die durch ihre Quetschventile 10 alle unten verschlossen sind. Durch diese erste Aufteilung der Ausgangsprobenmenge enthält jedes erste Teilprobenrohr 9 eine im wesentlichen gleichgroße Menge, d. h. also bei dreißig Teilprobenrohren 9 enthält jedes dieser Rohre eine Teilprobenmenge von etwa 100g. Um nun - wie angenommen -zwei Proben mit je 100g und zwei Proben mit je 500 g abzuteilen, werden für die zweite Teilungsstufe II in den Sammeltrichter 11 insgesamt 1200 g der Ausgangsprobenmenge eingelassen, dazu werden die Quetschventile 10 von zwölf ausgewählten ersten Teilprobenrohren 9 geöffnet, so daß zwölf mal 100 g = 1200 g der Ausgangsprobenmenge in diesen Sammeltrichter gelangen. Für diese zweite Aufteilung fließt das Schüttgut aus dem Sammeltrichter 11 über den Auslaufrohrstutzen 12 und das zweite Schieberrohrstück 13 (das wie das erste Schieberrohrstück 8 pulsierend auf-und abverfahren wird) von oben her zentral auf den zweiten Teilerkegel 14. Der zweite Teilerkegel 14 teilt nun - in genau gleichartiger Weise wie der erste Teilerkegel 8 - die ihm zulaufende 1200 g-Probe in vierundzwanzig gleichgroße Teilprobenmengen auf und leitet diese Teilprobenmengen über die zweiten Teilprobenrohre 15 in die entsprechenden Aufnahmegefäße 16. Bei der durch diesen Probenteiler 1 erzielbaren, relativ gleichmäßigen Aufteilung der Ausgangsprobenmenge enthält somit jedes Auffanggefäß16 eine Teilmenge von 50 g. Durch ein entsprechendes Zusammenführen der Teilmengen aus den Auffanggefäßen 16 können dann - wie in diesem Falle gefordert - zwei Teilproben mit je 100 g und zwei Teilproben mit je 500 g bereitgestellt werden.

Nachdem die zweite Teilung in der zweiten Teilungsstufe II abgeschlossen ist, wird die Ablenkklappe 29 der Rohrweiche 28 vollkommen in den Querschnitt des Auslaufrohrstutzens 12 eingeschwenkt, so daß nach Öffnen aller noch verschlossenen Quetschventile 10 der ersten Teilprobenrohre 9 das restliche Schüttgut der Ausgangsprobenmenge über den Ableitstutzen 30 abgeleitet und verworden werden kann.

Es sei schließlich noch festgestellt, daß bei dem beschriebenen Probenteiler 1 die Quetschventile 10 oder auch anderweitig ausgebildete Ventile grundsätzlich in jeder geeigneten Weise gesteuert werden können. Durch die angedeutete Druckluftsteuerung jedes einzelnen pneumatischen Quetschventiles 10 ergibt sich jedoch neben einer relativ einfachen zentralen Steuerung noch der Vorteil, daß insbesondere bei größeren Probenaufbereitungsanlagen die Probenteilung in äußerst vorteilhafter Weise programmierbar gestaltet werden kann. Hierdurch können für die zweite Teilungsstufe in vorprogrammierbarer und beliebig veränderbarer Weise aus dem ersten Teilprobenrohren 9 die dort enthaltenen Teilmengen für die zweite Teilungsstufe abgezogen werden.

## Ansprüche

1. Probenteiler für feinkörnige Schüttgutproben, enthaltend
a) ein im wesentlichen vertikal ausgerichtets Probeaufgaberohr,
b) ein unter dem Probeaufgaberohr angeordnetes Teilerorgan,
c) mehrere unterhalb des Teilerorgans vorgesehene Auffanggefäße zur Aufnahme je einer Teilprobenmenge,
gekennzeichnet durch folgende Merkmale:
d) das Teilerorgan ist durch einen zentral unter dem Probeaufgaberohr (6, 7) angeordneten, sich nach oben spitz-konisch verjüngenden, geraden Teilerkegel (8) mit einer Vielzahl von gleichmäßig über den Umfang seiner Basisfläche (8a) verteilt angeordneten Probenverteilöffnungen (18) gebildet;
e) das Probeaufgaberohr (6, 7) besitzt an seinem unteren Ende (6a) ein in vertikaler Richtung (7b) bewegbars Schieberrohrstück (7), dessen unteres Mündungsende (7a) pulsierend und abdichtend gegen die Mantelfläche des Teilerkegels (8) verfahrbar ist;
f) an die Probenverteilöffnungen (18) sind erste Teilprobenrohre (9) angeschlossen, die über an ihren unteren Enden angeordnete, einzeln im Öffnungs-und Schließsinne betätigbare Ventile (10) mit einem Sammeltrichter (11) verbunden sind;
g) das Auslaufende (11a) des Sammeltrichters (11) steht über einen Auslaufrohrstutzen, einen zentral darunter angeordneten zweiten Teilerkegel (14) und eine Anzahl von zweiten Teilprobenrohren (15) mit den Auffanggefäßen (16) in Verbindung.

2. Probenteiler nach Anspruch 1, dadurch gekennzeichnet, daß der zweite Teilerkegel (14) gleichartig wie der erste Teilerkegel (8) aufgebaut und mit den zweiten Teilprobenrohren (15) verbunden ist, wobei der Auslaufrohrstutzen (12) des Sammeltrichters (11) zentral über dem zweiten Teilerkegel durch ein zweites Schieberrohrstück (13) ausmündet, das ebenfalls in vertikaler Richtung bewegbar und dessen unteres Mündungsende pulsierend und abdichtend gegen die Mantelfläche dieses zweiten Teilerkegels (14) verfahrbar ist.

3. Probenteiler nach Anspruch 2, dadurch gekennzeichnet, daß jeder Teilerkegel (8, 14) zentral in einem ihn mit radialem Abstand umgebenden Gehäuse (17) angeordnet ist und die Probenverteilöffnungen (18) in dem Zwischengehäusemantel (19) und Kegelbasisfläche (8a) vorhandenen Ringraum eng aufeinanderfolgend ausgebildet sind, wobei das Schieberrohrstück (7, 13) zentral von oben her in das Gehäuse hineinragt.

4. Probenteiler nach Anspruch 3, dadurch gekennzeichnet, daß jeder Teilerkegel, (8, 14) und sein Gehäuse (17) einstückig hergestellt ist und die Probenverteilöffnungen (18) als Bohrungen ausgeführt sind.

5. Probenteiler nach Anspruch 3, dadurch gekennzeichnet, daß jeder Teilerkegel (8, 14) zumindest an seinem mit dem Mündungsende (7a) des Schieberrohrstückes (7) zusammenwirkenden oberen Ende (8b) eine glatte Mantelfläche aufweist.

6. Probenteiler nach Anspruch 5, dadurch gekennzeichnet, daß die Mantelfläche jedes Teilerkegels (8, 14) etwa im Bereich der unteren Kegelhälfte (8c) mit gleichmäßig über den Umfang verteilten, im Grundriß im wesentlichen radial verlaufenden, durchgehenden Leitrillen (21), versehen ist, wobei bis an jede Probenverteilöffnung (18) wenigstens eine Leitrille (21) herangeführt ist.

7. Probenteiler nach Anspruch 2, dadurch gekennzeichnet, daß die Schieberrohrstücke (7, 13) gleichartig ausgeführt sind und jedes Schieber rohrstück pneumatisch antreibbar ist und mit dem zugehörigen, darüber befindlichen festen Rohrabschnitt (6a, 12) nach Art einer Zylinder-Kolben-Anordnung zusammenwirkt.

8. Probenteiler nach Anspruch 1, dadurch gekennzeichnet, daß die Ventile an den unteren Enden der ersten Teilprobenrohre (9) durch pneumatisch und wahlweise betätigbare Quetschventile (10) gebildet sind.

9. Probenteiler nach Anspruch 8, dadurch gekennzeichnet, daß die Quetschventile (10) in gleichmäßiger Verteilung auf dem oberen Umfangsrand (11a) des nach unter konisch zulaufenden Sammeltrichters (11) angeordnet sind.

10. Probenteiler nach Anspruch 1, dadurch gekennzeichnet, daß in den Auslaufrohrstutzen (12) des Sammeltrichters (11) oberhalb des zweiten Schieberrohrstückes (13) eine Rohrweiche (28) zum Ableiten nicht benötigter Probenanteile eingebaut ist.

11. Probenteiler nach Anspruch 1, dadurch gekennzeichnet, daß das obere Ende des Probenaufgaberohres (6) an das untere Ende eines symmetrisch ausgebildeten Probenaufgabetrichters (5) angeschlossen ist.

12. Probenteiler nach Anspruch 2, dadurch gekenn zeichnet, daß -in Fließrichtung (3) des Probenschüttgutes betrachtet - das Probenaufgaberohr (6) mit dem ersten Schieberrohrstück (7), der erste Teilerkegel (8), die ersten Teilprobenrohre (9) mit ihren Ventilen (10), der Sammeltrichter (11) mit dem Auslaufrohrstutzen (12) und dem zweiten Schieberrohrstück (13) sowie die schräg nach unten-außen verlaufenden zweiten Teilprobenrohre (15), an deren unteren Elnden die Auffanggefäße (16) lösbar befestigt sind, untereinander und symmetrisch zu einer gemeinsamen vertikalen Achse (4) angeordnet sind, wobei das Probenaufgaberohr, der erste Teilerkegel, die ersten Teilprobenrohre und deren Ventile eine erste Teilungsstufe (I) und der Sammeltrichter (11), der Auslaufrohrstutzen (12) mit dem zweiten Schieberrohrstück, der zweite Teilerkegel und die zweiten Teilprobenrohre eine zweite Teilungsstufe (II) bilden.

FIG.1

0 266 534

FIG.2

FIG.3